Europäisches Patentamt

European Patent Office

Office européen des brevets

(19)

(11) EP 1 098 938 B1

(12) EUROPEAN PATENT SPECIFICATION

(45) Date of publication and mention
of the grant of the patent:
**11.06.2003 Bulletin 2003/24**

(51) Int Cl.7: **C09C 3/06**, C09C 1/00

(21) Application number: **99934688.5**

(22) Date of filing: **13.07.1999**

(86) International application number:
**PCT/EP99/04945**

(87) International publication number:
**WO 00/004101 (27.01.2000 Gazette 2000/04)**

(54) **INORGANIC BLACK PIGMENTS CONTAINING MOLYBDENUM**

ANORGANISCHE SCHWARZE MOLYBDÄN ENTHALTENDE PIGMENTE

PIGMENTS NOIRS INORGANIQUES RENFERMANT DU MOLYBDENE

(84) Designated Contracting States:
**AT BE CH CY DE DK ES FI FR GB GR IE IT LI LU MC NL PT SE**

(30) Priority: **15.07.1998 IT VI980135**

(43) Date of publication of application:
**16.05.2001 Bulletin 2001/20**

(73) Proprietor: **Inco Industria Colori S.R.L.**
**41020 Montebonello Pavullo (IT)**

(72) Inventors:
• **CAMARA, Boubacar**
**D-71549 Auenwald (DE)**
• **LAMI, Angelo**
**I-41020 Pavullo (IT)**
• **SPACCINI, Colombo**
**I-41100 Modena (IT)**
• **SPACCINI, Fabrizio**
**I-41100 Modena (IT)**

(74) Representative: **Bonini, Ercole**
**c/o STUDIO ING. E. BONINI SRL**
**Corso Fogazzaro 8**
**36100 Vicenza (IT)**

(56) References cited:
**GB-A- 487 078**    **US-A- 2 309 173**
**US-A- 5 250 112**

## Description

Inorganic black pigments are used to satisfy a wide variety of needs.

One specific use of inorganic black pigments is related to the manufacture of various ceramic products such as, for instance china tiles, sanitary products and enamelled crockery.

The well known handbook "Classification and chemical description of complex inorganic color pigments" third edition 1991, P.30-33, published by Dry Color Manufacturers Association, 300 North Washington Street, Suite 102, names the following group of inorganic black pigments:

$(Cu)[Cr]_2O_4$, (C.I. Pigment Black 28)
$(Fe, Co)[Fe]_2O_4$ (C.I. Pigment Black 29)
$(Fe, Co)[Fe, Cr]_2O_4$ (C.I. Pigment Black 27)
$(Fe, Mn)[Fe, Mn]_2O_4$ (C.I. Pigment Black 26)
$(Fe, Ni)[Fe, Cr]_2O_4$ (C.I. Pigment Black 30)

These compounds are mixed oxides, which in addition to oxygen have two or more metals. They do not have a specific denomination, but are generally referred to as spinels.

The $(Fe, Cr)_2O_3$ system can also be added to this list since it is widely used to colour ceramics.

The inorganic black pigments belonging to the above systems can contain other metal oxides acting as colour modifiers.

The choice of modifier depends on the specific pigment system.

For example the DCMA handbook mentioned earlier lists the modifiers by the various pigment systems below:

- For Pigment Black 28: $Fe_2O_3$, MnO;
- For Pigment Black 29: $Al_2O_3$, $B_2O_3$, MnO, NiO, $SiO_2$;
- For Pigment Black 27: CuO, $Al_2O_3$, $B_2O_3$, MnO, NiO, $SiO_2$,
- For Pigment Black 26: $TiO_2$, CoO, CuO, $Al_2O_3$, NiO, $SiO_2$;
- For Pigment Black 30: $Mn_2O_3$, MnO, CuO.

The influence of these modifiers on the colouring properties of black pigments is not generally very strong and even if it is strong, it is not specific enough.

This is especially apparent when modifiers are present in low concentrations.

In other words, the addition of the aforementioned modifiers cannot obtain significant variations in the desired direction of parameters *L, a* and *b* of the Hunter diagram.

The US-A-2309173 discloses a method of preparation of improved black ceramic pigments, which are essentially of the copper-crome type prepared by calcination of a dry mixture of copper oxide and cromium oxide or compounds yielding these oxides when heated.

The chemical action of said pigments belonging to the system Cu-Cr especially depends on the Cu reaction, which depends on the oxidation status. As a consequence of this, the only effect arising from adding the modifier $MoO_3$ in said black pigments, is an increasing of the colorant effect, but not a change of the brown tonality of the inorganic black pigments.

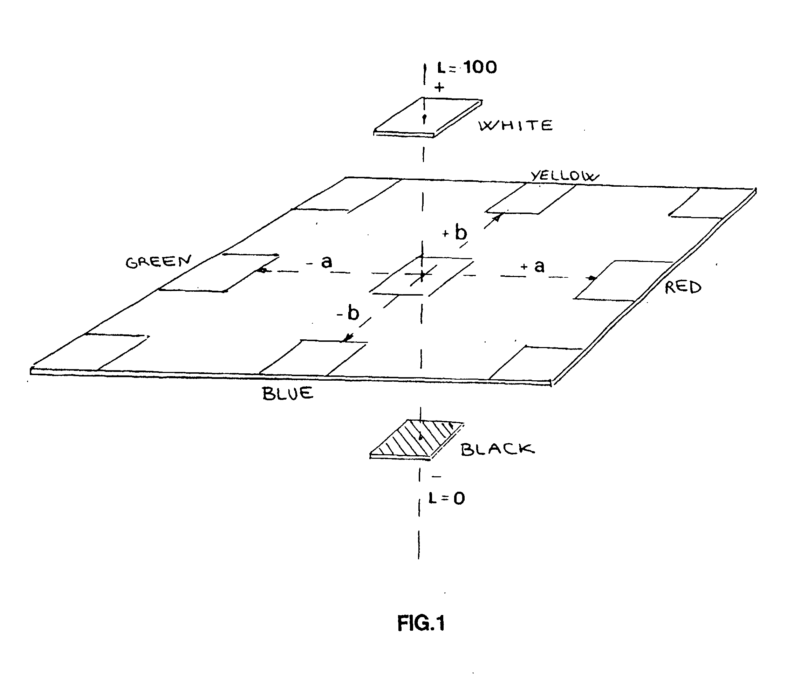

According to the invention process, it has been seen that by calcinating inorganic black pigments with Molybdenum, or with Molybdenum compounds, preferably oxides $(Mo_2O_3)$, the calcination process causes a drastic change in the *L, a* and *b* colour values on the Hunter diagram where, as seen in fig. 1, *L* is the coordinate that measures the colour intensity from white to black, *a* is the coordinate that measures the colour intensity from red to green, *b* is the coordinate that measures the colour intensity from yellow to blue of the pigments.

It was also seen that relatively small additions of molybdenum have a greater influence on the *a* and *b* values than on the *L* value.

The *a* and *b* values generally decrease, but the *a* value decreases much more than the *b* value.

It was also seen that, by increasing the addition of molybdenum, the variations in *a* and *b* are relatively smaller.

The process according to the invention gives the possibility of varying colours that characterise the inorganic black pigments of a given composition in exactly the desired direction to improve the pigments, in the sense that a pigment black is obtained which has basically no influence from the other base colours.

In particular, this invention makes it possible to change the *a* value much more effectively that the *b* value. In this way the problem of the different hues of brown found in the majority of inorganic black pigments is solved. This brown hue is usually characterised by a high positive *a* value (a>1.00). The amount of molybdenum that has to be added depends on the pigment system and on the effect that has to be obtained.

To demonstrate the effect that molybdenum has on black pigments, three pigments were chosen from the following systems:

Pigments based on the $(Fe,Cr)_2O_3$ system are generally used as colours for clays.
Pigments based on the $(Ni, Mn, Fe)[Fe,Cr,Mn]_2O_4$ system are generally used as glazes or enamels.

These pigments do not contain cobalt and are therefore less expensive than pigments containing cobalt, in other words based on the $(Co,Ni, Mn, Fe)[Fe,Cr, Mn]_2O_4$ system

<u>Experiment</u>: To prepare the pigments containing molybdenum compounds described in this invention 100 parts by weight of a lot of normal raw pigment that has to be corrected were taken, and the required quantity X of molybdenum compounds was added, being between 0.05 and 5 parts by weight (0.05<X<5 by weight).

The mixing, the calcination, the finishing and the testing on the pigment must be conducted with the normal procedures used to produce pigments to be modified.

To clearly show the effect of adding molybdenum, control samples not containing molybdenum are also prepared under the same conditions. The colours for clays containing molybdenum and the control sample are tested during a normal production of tiles.

The $(Ni,Mn,Fe)[Fe,Cr,Mn]_2O_4$ based glazes or enamels and the control colours are tested in conventional transparent (T) and opaque (O) enamels.

To determine the *L*, *a*, and *b* values of the samples tested, a Minolta CR-331 colorimeter was used.

The results are given below:

<u>Example 1</u>: Pigment based on the $(Fe,Cr)_2O_3$ system (Group of inorganic black pigments used as colours for clays)

- Composition of the control pigment **(A1)**:

$Fe_2O_3$ 38.70%
$Cr_2O_3$ 61.30%

- Composition of the pigment containing molybdenum oxide $Mo_2O_3$ **(A2)**:

100 parts A1 + 0.5 parts A2 $(Mo_2O_3)$

Absolute colour values *L, a, b* of the two pigments in the glaze of the tile (5% pigment by weight)

|   | A1 | A2 |
|---|---|---|
| **L** | 41.00 | 39.36 |
| **a** | 0.49 | 0.18 |
| **b** | -0.47 | -1.10 |

It can be seen that the addition of 0.5% by weight of $Mo_2O_3$ to the pigment decreases considerably all three values *a, b* and *L,* giving a more intense pigment without the undesirable red hue.

<u>Example 2</u>: Pigment based from the $(Ni,Mn,Fe)[Fe,Cr,Mn]_2O_4$ spinel system (group of cobalt-free pigments used as colours for clays)

- Composition of the control pigment **(B1)**:

$Fe_2O_3$ 33.70%
$Cr_2O_3$ 33.70%
$MnO_2$ 17.70%
NiO 14.90%

- Composition of the pigment containing molybdenum oxide $Mo_2O_3$ **(B2)**:

100 parts B1 + 2 parts $Mo_2O_3$

- *L, a, b* absolute colour values of the pigments in transparent (T) and opaque (O) enamels (<u>5% pigment by weight</u>).

|   | B1(T) | B2(T) | B1(O) | B2(O) |
|---|---|---|---|---|
| **L** | 11.00 | 10.57 | 52.61 | 51.50 |
| **a** | 4.70 | 0.98 | 1.80 | -0.45 |
| **b** | 5.31 | 2.82 | -0.66 | -2.67 |

The high *a* value, 4.70, in the transparent enamel, gives it a brown hue. By adding 2% $Mo_2O_3$ by weight to the pigment, the a value drastically decreases to 0.98 and the brown hue disappears.

<u>Example 3:</u> Pigment based on the $(Co,Ni, Fe, Mn,)[Fe,Cr,Mn]_2O_4$ spinel system (group of black pigments containing cobalt for enamels)

- Composition of the control pigment **(C1)**:

CoO 24.10%
$Fe_2O_3$ 26.75%
$Cr_2O_3$ 27.85%
NiO 8.85%
$MnO_2$ 12.45%

- Composition of the pigment containing molybdenum **(C2)**:

100 parts C1 + 2 parts $Mo_2O_3$

- *L, a, b* absolute colour values of the pigments in transparent (T) and opaque (O) porous glazes:

|   | C1(T) | C2(T) | C1(O) | C2(O) |
|---|---|---|---|---|
| **L** | 4.67 | 6.84 | 42.40 | 50.17 |
| **a** | 1.88 | 0.98 | 0.79 | -0.14 |
| **b** | 1.24 | 0.14 | -4.51 | -5.45 |

Even in this case, by adding 2% by weight of $Mo_2O_3$ to the pigment, the *a* and *b* colour values are smaller and the pigment becomes a neutral black.

## Claims

1. A method for preparation of inorganic black pigments by calcination process, **characterized by** the following steps:

    - preparing inorganic black pigments chosen by at least one of the following

        a) $(Fe, Co)[Fe]_2 O_4$
        b) $(Fe, Co)[Fe, Cr]_2 O_4$
        c) $(Fe, Mn)[Fe, Mn]_2 O_4$
        d) $(Fe, Ni)[Fe, Cr]_2 O_4$
        e) $(Fe, Cr)_2 O_3$
        f) $(Ni, Fe, Mn)[Fe, Cr, Mn]_2 O_4$

    - adding $Mo_2O_3$ from 0,05 to 5 wt% to at least one of said inorganic black pigments;
    - calcinating said mixture

2. The method according to claim 1, **characterized in that** the mixture of inorganic black pigments is added with about 0,5 wt % of Molybdenum oxide $(Mo_2O_3)$.

3. The method according to claim 1, **characterized in that** the mixture of inorganic black pigments is added with about 2 wt % of Molybdenum oxide $(Mo_2O_3)$.

4. The method according to claim 1 **characterized in that** the black inorganic pigments used are a mixture of:

    $Fe_2O_3$
    $Cr_2O_3$

    and **in that** the $Mo_2O_3$ is added as 0,5 wt%.

5. The method according to claim 1 **characterized in that** the black pigments used are a mixture of:

    $Fe_2O_3$
    $Cr_2O_3$
    $MnO_2$
    $NiO$

    and **in that** the $Mo_2O_3$ is added as 2 wt%.

6. The method according to claim 1 **characterized in that** the black pigments used are a mixture of:

    $CoO$
    $Cr_2O_3$

    $Fe_2O_3$
    $NiO$
    $MnO_2$

    and **in that** the $Mo_2O_3$ is added as 2 wt%.

7. The use of the inorganic black pigments obtained with the method of preparation according to any one of the preceeding claims, as colorants for ceramic goods or the like.

## Patentansprüche

1. Eine Methode zur Herstellung anorganischer, schwarzer Pigmente mittels Kalzinieren, **gekennzeichnet durch** folgende Schritte:

    - Vorbereitung anorganischer, schwarzer Pigmente, ausgewählt aus wenigstens einem der nachstehenden Stoffe:

        a) $(Fe, Co) [Fe]_2 O_4$
        b) $(Fe, Co) [Fe, Cr]_2 O_4$
        c) $(Fe, Mn) [Fe, Mn]_2 O_4$
        d) $(Fe, Ni) [Fe, Cr]_2 O_4$
        e) $(Fe, Cr)_2 O_3$
        f) $(Ni, Fe, Mn) [Fe, Cr, Mn]_2 O_4$;

    - Zugabe von $Mo_2O_3$ im Umfang von 0,05 bis 5 Gew./% zu wenigstens einem der anorganischen, schwarzen Pigmente;
    - Kalzinieren des Gemischs.

2. Die Methode gemäß Patentanspruch 1, **dadurch gekennzeichnet, dass** das Gemisch anorganischer, schwarzer Pigmente mit etwa 0,5 Gew./% Molybdänoxid $(Mo_2O_3)$ versetzt wird.

3. Die Methode gemäß Patentanspruch 1, **dadurch gekennzeichnet, dass** das Gemisch anorganischer, schwarzer Pigmente mit etwa 2 Gew./% Molybdänoxid $(Mo_2O_3)$ versetzt wird.

4. Die Methode gemäß Patentanspruch 1, **dadurch gekennzeichnet, dass** die verwendeten, anorganischen, schwarzen Pigmente ein Gemisch sind aus

    $Fe_2O_3$
    $Cr_2O_3$

    **und dass** das $Mo_2O_3$ im Umfang von 0,5 Gew./% zugesetzt wird.

5. Die Methode gemäß Patentanspruch 1, **dadurch gekennzeichnet, dass** die verwendeten, anorganischen, schwarzen Pigmente ein Gemisch sind

aus

$Fe_2O_3$
$Cr_2O_3$
$Mn_2O_3$
NiO

**und dass** das $Mo_2O_3$ im Umfang von 2 Gew./% zugesetzt wird.

6. Die Methode gemäß Patentanspruch 1, **dadurch gekennzeichnet, dass** die verwendeten, anorganischen, schwarzen Pigmente ein Gemisch sind aus

CoO
$Cr_2O_3$
$Fe_2O_3$
NiO
$MnO_2$

und dass das $Mo_2O_3$ im Umfang von 2 Gew./% zugesetzt wird.

7. Der Gebrauch der gemäß der einem jeglichen der vorstehenden Patentansprüche entsprechenden Herstellungsmethode erzeugten, anorganischen schwarzen Pigmente als Farbstoffe für Keramikprodukte oder Ähnliches.

**Revendications**

1. Une méthode pour la préparation de pigments noirs inorganiques au moyen d'un processus de calcination, **caractérisée par** les passages suivants:

- une préparation de pigments noirs inorganiques choisis parmi au moins une des substances suivantes

a) (Fe, Co) $[Fe]_2 O_4$
b) (Fe, Co) $[Fe, Cr]_2 O_4$
c) (Fe, Mn) $[Fe, Mn]_2 O_4$
d) (Fe, Ni) $[Fe, Cr]_2 O_4$
e) $(Fe, Cr)_2 O_3$
f) (Ni, Fe, Mn) $[Fe, Cr, Mn]_2 O_4$;

- addition de $Mo_2O_3$ de 0,05 à 5 poids/% à au moins un desdits pigments noirs inorganiques;
- une calcination dudit mélange.

2. La méthode selon la revendication 1), **caractérisée en ce que** le mélange de pigments noirs inorganiques est additionné avec environ 0,5 poids/% d'oxyde de molibdène ($Mo_2O_3$).

3. La méthode selon la revendication 1), **caractérisée**

en ce que le mélange de pigments noirs inorganiques est additionné avec environ 2 poids/% d'oxyde de molibdène ($Mo_2O_3$)

4. La méthode selon la revendication 1), **caractérisée en ce que** les pigments noirs inorganiques utilisés sont un mélange de:

$Fe_2O_3$
$Cr_2O_3$

**et en ce que** le $Mo_2O_3$ est additionné en quantité de 0,5 poids/%.

5. La méthode selon la revendication 1), **caractérisée en ce que** les pigments noirs utilisés sont un mélange de:

$Fe_2O_3$
$Cr_2O_3$
$Mn_2O_3$
NiO
**et en ce que** le $Mo_2O_3$ est additionné en quantité de 2 poids/%.

6. La méthode selon la revendication 1), **caractérisée en ce que** les pigments noirs utilisés sont un mélange de:

CoO
$Cr_2O_3$
$Fe_2O_3$
NiO
$MnO_2$

**et en ce que** le $Mo_2O_3$ est additionné en quantité de 2 poids/%.

7. L'utilisation de pigments noirs inorganiques obtenus grâce à la méthode de préparation selon une quelconque des revendications précédentes, comme couleurs pour produits en céramique ou similaire.

FIG.1